# EUROPEAN PATENT SPECIFICATION

(11) **EP 1 845 495 B1**
(45) Date of publication and mention of the grant of the patent: **24.05.2017**
(21) Application number: 07270017.2
(22) Date of filing: 26.03.2007
(51) Int. Cl.: G07C 9/00, B60R 25/06, B60R 25/08, B60T 7/12, B60T 13/74, B60T 17/18, F16H 63/48

(54) **Electric Parking Brake System**
Elektrisches Parkbremsensystem
Système de frein à main électrique

(30) Priority: 10.04.2006 GB 0607058
(43) Date of publication of application: 17.10.2007
(73) Proprietor: Jaguar Land Rover Limited, Whitley Coventry CV3 4LF (GB)
(72) Inventor: Gore-Brown, Nathan, Warwickshire, CV21 4PQ (GB); Irvine, Mark, West Midlands, B91 3FL (GB)
(74) Representative: Holmes, Matthew William

(56) References cited:
- EP-A1- 0 972 667
- EP-A1- 1 424 255
- EP-A2- 1 077 337
- EP-A2- 1 519 086
- DE-A1- 10 028 350
- DE-A1- 10 037 576
- DE-A1- 10 320 052
- US-A1- 2003 057 766
- US-A1- 2005 023 892

## Description

The present invention relates to an electrically powered parking brake (EPB). In particular, the present invention relates to a motor vehicle having an electric park brake control system and method for the automatic activation of the parking brake for a motor vehicle devoid.. of a mechanical key to trigger the ignition of the motor.

US 6,802,574 describes such a motor vehicle devoid of a mechanical key and having an electronic control unit that automatically activates the electric park brake based on signals indicating the "shutting off" of the internal combustion engine.

DE 10037576 also describes the automatic operation of a parking brake when the internal combustion engine of a vehicle is shut off.

DE 10028350 also describes the automatic operation of a parking brake. However, in this specification the parking brake is both operated and then locked if the park position of the transmission is selected. DE 10028350 describes an electric parking brake control system for a motor vehicle devoid of a mechanical key to trigger its ignition; the vehicle having an internal combustion engine and including an electric park brake mechanism for applying a park brake force to the vehicle, an electric park brake control module, a transmission having a number of operating modes, at least one of the operating modes being Park mode, a transmission control unit which in use controls the ratio of the transmission, a selector which is operable by the driver of the vehicle to select a respective one of the operating modes of the transmission and an electronic transmission selector for sensing the selected mode position of the transmission, an On/Off switch and an electronic ignition control module for selectably turning the ignition on or off of the internal combustion engine in response to activity of the On/Off switch.

According to an aspect of the present invention there is provided a motor vehicle devoid of a mechanical key to trigger its ignition, the motor vehicle comprising: an internal combustion engine; an On/Off ignition switch and an electronic ignition control module for selectably turning the ignition on or off of the internal combustion engine in response to activity of On/Off ignition switch; a transmission having a number of operating modes, at least one of the operating modes being Park mode; a transmission control unit (TCU) which, in use, controls the ratio of the transmission; a selector which is operable by the driver of the vehicle to select a respective one of the operating modes of the transmission; an electronic transmission, selector for sensing the selected mode position of the transmission and an electric park brake control system, the electric park brake control system comprising an electric park brake mechanism for applying a park brake force via an electric motor to the vehicle and an electric park brake control module. The motor vehicle is characterised in that the electric park brake control module applies the park brake force through the electric park brake mechanism on receipt of both of signals from the electric transmission selector indicating that the transmission is in "park mode" and from the electronic ignition control module indicating that ignition has been turned off by the On/Off ignition switch.

Embodiments of the invention provide- an improved electric parking brake for a motor vehicle with no removable key, but equipped with an On/Off ignition switch for starting and stopping the engine, and an electronic transmission selector.

According to a further aspect of the present invention there is provided, a method for operating an electric parking brake control system of a motor vehicle as defined above, wherein, when the On/Off ignition switch has been activated to turn the engine ignition off, of the method comprises:
a) checking that the electric park- brake mechanism is in the release position;
b) checking that the vehicle is at a standstill position;
c) checking that the electronic transmission selector is in Park mode and, if not, shifting the vehicle transmission into Park mode; and
d) providing an instruction command to the electric park brake mechanism to apply the brake force to the vehicle.

Such a method ensures that the vehicle will be in a safe condition with the park brake activated even if the driver has forgotten to select the transmission in park mode.

The invention will now be.described by way of example with reference to the accompanying drawings of which:-
Fig.1 is a schematic representation of the principal electrical subsystems of a motor vehicle provided with an electric park brake system (EPB) that are involved in the parking brake control, that is an On/Off switch, an electronic ignition control module, a selector, an electronic transmission, selector, a transmission control u nit, an engine a transmission, an EPB control module and an EPB mechanism; and
Fig.2 is a flow chart showing a method for automatically activating the parking brake mechanism in the EPB system drawn in Fig.1.

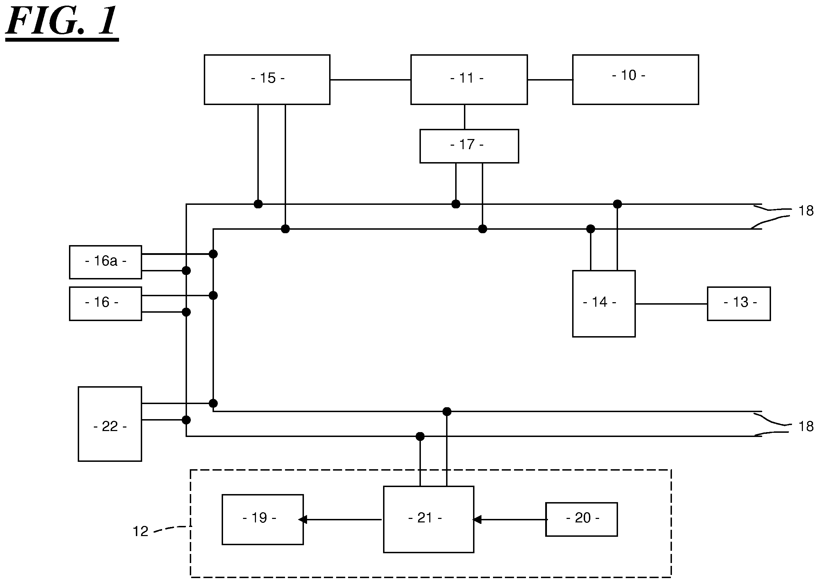

With reference to Fig.1, there is shown an electrical architecture of a motor vehicle including an internal combustion engine 10, an automatic gearbox or transmission 11, an EPB system 12 and an On/OFF ignition switch 13 for example in the form of Stop/Start button which is provided in a passenger compartment. The On/Off switch 13 is connected to an electronic ignition control module 14 for turning on or turning off the engine ignition.

The transmission 11 is, in the embodiment shown, controlled by a transmission control unit (TCU) 15. The TCU 15 is electrically connected to a selector 16 which is provided in a passenger compartment for enabling the selection of operating modes, i.e. Park (P), Reverse (R), Neutral (N) and Drive (D) in the transmission.

The selector 16 comprises a rotary switch which can be grasped by the driver to select the operating mode and sensors means in the form of sensors to detect the position of the rotary switch and to transmit an input to the TCU 15. The rotary switch 16 has a dynamic indicator 16a in the form of an illuminated pointer and an arrangement of illuminated labels indicating the selector mode. This dynamic indicator 16a is electrically connected to the TCU 15 to be visible when the vehicle is to be driven and move with the rotary switch 16.

The TCU 15 is electrically connected to an Electronic Transmission Selector (ETS) 17 in the form of sensors arranged to detect the position of the gearbox. The TCU 15 is also connected to a driver display unit (not shown) in order to indicate the currently engaged gear of the transmission indicated by the ETS 17 and possibly any transmission fault.

It will be appreciated that communications between the TCU 15 and the different electronic components mentioned above, that is the selector 16 and ETS 17, the electronic ignition control module 14, are conveniently performed by a standard corporate protocol bus interface, such as a Controller Area Network (CAN) serial bus 18.

The EPB system 12 includes an EPB mechanism 19 which comprises an electric motor and leadscrew connected to brakes through a cable. The EPB system also includes an EPB switch 20 connected to provide a manual control of the EPB mechanism 19.

As the vehicle is devoid of a mechanical key, therefore there is not mechanical device preventing the driver from turning the engine ignition off by pushing the On/Off switch 13 without previously securing the vehicle by shifting the transmission 11 in park mode. Although it is possible to automatically apply the parking brake to keep the vehicle standstill, it is not recommended since when the driver come back to the vehicle and start the vehicle the forward or reverse gear selected can be source of an accident. To overcome this problem and allow automatic application of the parking brake in response to parking condition of the vehicle, the EPB system 12 is provided with an EPB control module 21 to automatically apply a park brake force to the vehicle according to a control strategy.

The EPB control module 21 is connected to the (CAN) serial bus 18, from which it receives input signals from different electronic components of the vehicle, that is the ETS 17 and the electronic ignition control module 14. The EPB control module 21 receives also a vehicle speed input from an antilock braking system (ABS) 22 via the CAN Bus 18.

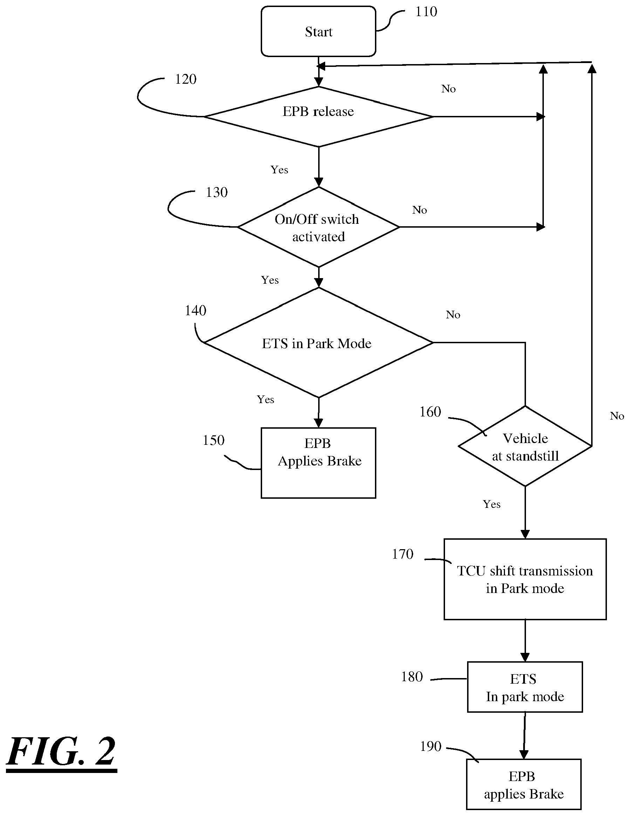

Fig.2 illustrates a flow diagram of the control strategy of the EPB control module. The control routine starts at 110, in which the engine ignition has previously been turned on by the On/Off switch. Inquiries are made at steps 120, 130 and 140 to check the overall status of the vehicle. In particular, an inquiry is made at 120 to determine whether the EPB mechanism is release. If yes, an inquiry is made at 130 as to whether the On/Off switch has been activated to turn the ignition off. If the ignition power mode is off, a check is made at step 140 to determine whether the ETS is in park mode. A positive answer to any of these inquiries will transmit a command to the EPB mechanism so as to apply a brake force, at step 150.

On the contrary a negative answer to the first,two inquiries 110, 120 will shift the routine back to step 110.

However a negative answer only to the third, inquiry 140, that is when the ETS indicates that the transmission is not in park mode, an inquiry is made at step 160 to determine whether the vehicle speed input (available via the ABS) indicates the vehicle is standstill. If the answers is no, the routine is back to step 110. If yes, the TCU 15 will shift the transmission .11 into park selection at 170. Then, the EPB control module 21 upon receipt of an input from the ETS 17 confirming that the transmission 11 is in park mode, at step 180, transmits a command to the EPB mechanism 19 so as to apply a brake force to the vehicle, at step 190.

It will be appreciated that the selector 16 is provided with a drive correction means to move the dynamic indicator of the selector 16 towards the park selection when the engine ignition is turned on again by the On/Off switch.

Although the invention has been described by way of example with reference to a specific embodiment of the invention various modifications or additions may be made without departing from the invention.

For example, the rotary switch selector 16 could be replaced with several switch buttons in which the dynamic indicator is an arrangement of illuminated labels associated to each switch .button so as to indicate the selector mode.

in a modification the selector 16 is a lever and' the drive correction means is arranged to move the lever to the park position under the TCU command when the engine ignition is turned off by the On/Off switch.

## Claims

1. A motor vehicle devoid of a mechanical key to trigger its ignition, the motor vehicle comprising:
an internal combustion engine (10);
an On/Off ignition switch (13) and an electronic ignition control module (14) for selectably turning the ignition on or off of the internal combustion engine (10) in response to activity of On/Off ignition switch (13);
a transmission (11) having a number of operating modes, at least one of the operating modes being Park mode;
a transmission control unit (TCU) (15) which, in use, controls the ratio of the transmission;
a selector (16) which is operable by the driver of the vehicle to select a respective one of the operating modes of the transmission;
an electronic transmission selector (17) for sensing the selected mode position of the transmission; and
an electric park brake control system (12), the electric park brake control system comprising an electric park brake mechanism (19) for applying a park brake force via an electric motor to the vehicle and an electric park brake control module (21);
**characterised in that** the electric park brake control module (21) applies the park brake force through the electric park brake mechanism (19) on receipt of both of signals from the electronic transmission selector (17) indicating that the transmission is in "park mode" and from the electronic ignition control module (14) indicating that ignition has been turned off by the On/Off ignition switch (13).

2. A motor vehicle as claimed in Claim 1, in which the transmission control unit (15) is adapted to shift the transmission (11) in Park mode of the transmission before the electric park brake mechanism (19) applies the brake force if, when the On/Off ignition switch (13) is activated to turn the engine ignition off, the motor vehicle is at standstill and the selector (16) has not been moved to select the Park mode of the transmission.

3. A motor vehicle as claimed in Claim 1 or Claim 2, in which the electric park brake control module (21) is interconnected with electronic modules of the vehicle by a standard corporate protocol bus (18).

4. A motor vehicle as claimed in Claim 3 in which the electric park brake control module (21) is interconnected with the transmission control unit (15), the electronic transmission selector (17), the electronic ignition control module (14) and an Antilock Braking System (22) by the standard corporate protocol bus (18).

5. A method for operating an electric parking brake control system (12) of a motor vehicle as claimed in any of Claims 1 to 4, wherein, when the On/Off ignition switch (13) has been activated to turn the engine ignition off, the method comprises:
a) checking that the electric park brake mechanism (19) is in the release position;
b) checking that the vehicle is at a standstill position;
c) checking that the electronic transmission selector (17) is in Park mode and, if not, shifting the vehicle transmission into Park mode; and
d) providing an instruction command to the electric park brake mechanism (19) to apply the brake force to the vehicle.

## Patentansprüche

1. Kraftfahrzeug ohne einen mechanischen Schlüssel zum Auslösen der Zündung, wobei das Kraftfahrzeug Folgendes umfasst:
einen Verbrennungsmotor (10);
einen Zündungs-Ein/Aus-Schalter (13) und ein elektronisches Zündungssteuermodul (14) zum selektiven Ein- und Ausschalten der Zündung des Verbrennungsmotors (10) als Reaktion auf ein Betätigen des Zündungs-Ein/Aus-Schalters (13);
ein Getriebe (11) mit mehreren Betriebsmodi, wobei wenigstens einer der Betriebsmodi ein Parkmodus ist;
ein Getriebesteuergerät (transmission control unit - TCU) (15), das im Gebrauch die Getriebeübersetzung steuert;
einen Wählhebel (16), der vom Fahrer des Fahrzeugs bedient werden kann, um einen entsprechenden der Betriebsmodi des Getriebes zu wählen;
eine elektronische Getriebewähleinheit (17) zum Erfassen der gewählten Modusposition für das Getriebe; und
ein elektrisches Feststellbremssteuersystem (12), wobei das elektrische Feststellbremssteuersystem einen elektrischen Feststellbremsmechanismus (19) zum Anlegen einer Feststellbremskraft über einen Elektromotor auf das Fahrzeug sowie ein elektrisches Feststellbremssteuermodul (21) umfasst;
**dadurch gekennzeichnet, dass** das elektrische Feststellbremssteuermodul (21) bei Empfang sowohl des Signals von der elektronischen Getriebewähleinheit (17), das andeutet, dass das Getriebe im "Parkmodus" ist, als auch des Signals vom elektronischen Zündungssteuermodul (14), das andeutet, dass die Zündung über den Zündungs-Ein/Aus-Schalter (13) ausgeschaltet worden ist, die Feststellbremskraft über den elektrischen Feststellbremsmechanismus (19) anlegt.

2. Kraftfahrzeug nach Anspruch 1, wobei das Getriebesteuergerät (15) angepasst ist, das Getriebe (11) in einen Parkmodus des Getriebes zu versetzen, bevor der elektrische Feststellbremsmechanismus (19) die Bremskraft anlegt, falls, wenn der Zündungs-Ein/Aus-Schalter (13) aktiviert wird, um den Motor abzustellen, das Kraftfahrzeug stillsteht und der Wählhebel (16) nicht bewegt worden ist, um den Parkmodus des Getriebes zu wählen.

3. Kraftfahrzeug nach Anspruch 1 oder 2, wobei das elektrische Feststellbremssteuermodul (21) über einen Standardfirmenprotokoll-Bus (18) mit den Elektronikmodulen des Fahrzeugs verbunden ist.

4. Kraftfahrzeug nach Anspruch 3, wobei das elektrische Feststellbremssteuermodul (21) über den Standardfirmenprotokoll-Bus (18) mit dem Getriebesteuergerät (15), der elektronischen Getriebewähleinheit (17), dem elektronischen Zündungssteuermodul (14) und einem Antiblockiersystem (22) verbunden ist.

5. Verfahren zum Betreiben eines elektrischen Feststellbremssteuersystems (12) eines Kraftfahrzeugs nach einem der Ansprüche 1 bis 4, wobei, wenn der Zündungs-Ein/Aus-Schalter (13) aktiviert worden ist, um den Motor abzustellen, das Verfahren Folgendes umfasst:
a) Sicherstellen, dass der elektrische Feststellbremsmechanismus (19) in der Freigabeposition ist;
b) Sicherstellen, dass das Fahrzeug stillsteht;
c) Sicherstellen, dass die elektronische Getriebewähleinheit (17) im Parkmodus ist, und, falls dies nicht der Fall ist, Schalten des Fahrzeuggetriebes in den Parkmodus; und
d) Bereitstellen eines Anweisungsbefehls an den elektrischen Feststellbremsmechanismus (19), die Bremskraft auf das Fahrzeug aufzubringen.

## Revendications

1. Véhicule motorisé dépourvu d'une clé mécanique pour déclencher son allumage, le véhicule motorisé comprenant :
un moteur à combustion interne (10) ;
un commutateur d'allumage de marche/arrêt (13) et un module de commande d'allumage électronique (14) pour mettre en marche ou arrêter de façon sélectionnable l'allumage du moteur à combustion interne (10) en réponse à l'activité du commutateur d'allumage de marche/arrêt (13) ;
une transmission (11) ayant un certain nombre de modes d'exploitation, au moins l'un des modes d'exploitation étant un mode stationnement ;
une unité de commande de transmission (TCU) (15) qui, en utilisation, commande le rapport de la transmission ;
un sélecteur (16) qui est exploitable par le conducteur du véhicule afin de sélectionner un mode respectif des modes d'exploitation de la transmission ;
un sélecteur de transmission électronique (17) pour détecter la position de mode sélectionné de la transmission ; et
un système de commande de frein de stationnement électrique (12), le système de commande de frein de stationnement électrique comprenant un mécanisme de frein de stationnement électrique (19) pour appliquer une force de frein de stationnement par l'intermédiaire d'un moteur électrique au véhicule et un module de commande de frein de stationnement électrique (21) ;
**caractérisé en ce que** le module de commande de frein de stationnement électrique (21) applique la force de frein de stationnement par l'intermédiaire du mécanisme de frein de stationnement électrique (19) lors de la réception de signaux provenant à la fois du sélecteur de transmission électronique (17) indiquant que la transmission est en « mode stationnement » et du module de commande d'allumage électronique (14) indiquant que l'allumage a été arrêté par le commutateur d'allumage de marche/arrêt (13).

2. Véhicule motorisé selon la revendication 1, dans lequel l'unité de commande de transmission (15) est adaptée pour faire passer la transmission (11) en mode stationnement de la transmission avant que le mécanisme de frein de stationnement électrique (19) applique la force de frein si, lorsque le commutateur d'allumage de marche/arrêt (13) est activé pour arrêter l'allumage moteur, le véhicule motorisé est immobilisé, et le sélecteur (16) n'a pas été déplacé pour sélectionner le mode stationnement de la transmission.

3. Véhicule motorisé selon la revendication 1 ou la revendication 2, dans lequel le module de commande de frein de stationnement électrique (21) est interconnecté avec des modules électroniques du véhicule par un bus de protocole collectif standard (18).

4. Véhicule motorisé selon la revendication 3, dans lequel le module de commande de frein de stationnement électrique (21) est interconnecté avec l'unité de commande de transmission (15), le sélecteur de transmission électronique (17), le module de commande d'allumage électronique (14) et un système de freinage antiblocage (ABS) (22) par le bus de protocole collectif standard (18).

5. Procédé pour exploiter un système de commande de frein de stationnement électrique (12) d'un véhicule motorisé tel que revendiqué à l'une quelconque des revendications 1 à 4, dans lequel, lorsque le commutateur d'allumage de marche/arrêt (13) a été activé pour arrêter l'allumage moteur, le procédé comprend :
a) le fait de vérifier que le mécanisme de frein de stationnement électrique (19) est en position de relâchement ;
b) le fait de vérifier que le véhicule est en position immobilisée ;
c) le fait de vérifier que le sélecteur de transmission électronique (17) est en mode stationnement, et si tel n'est pas le cas, le passage de la transmission de véhicule en mode stationnement ; et
d) la fourniture d'un ordre d'instruction au mécanisme de frein de stationnement électrique (19) pour appliquer la force de frein au véhicule.
